# EUROPÄISCHE PATENTSCHRIFT

(11) **EP 2 292 559 B1**
(45) Veröffentlichungstag und Bekanntmachung des Hinweises auf die Patenterteilung: **19.07.2017**
(21) Anmeldenummer: 09010293.0
(22) Anmeldetag: 10.08.2009
(51) Int. Cl.: C01D 3/08

(54) **Zementstaubaufbereitung**
Cement dust preparation
Préparation de poussière de ciment

(43) Veröffentlichungstag der Anmeldung: 09.03.2011
(73) Patentinhaber: Ebner, Stefan, 61440 Oberursel/Taunus (DE)
(72) Erfinder: Ebner, Stefan, 61440 Oberursel/Taunus (DE)
(74) Vertreter: Köster, Hajo

(56) Entgegenhaltungen:
- EP-A- 0 003 065
- WO-A-2008/106741
- DE-B1- 1 592 009
- JP-A- 11 209 121
- JP-A- 2006 176 384
- US-A- 1 402 173

## Beschreibung

Die Erfindung betrifft ein Verfahren zur Rückgewinnung von Kaliumchlorid und Natriumchlorid sowie Kaliumsulfat aus einer wässrigen Rohlösung, die durch Behandeln von partikelförmigen Zementstäuben, welche diese Salze enthalten, mit Wasser erhalten wurde.

Für die Aufbereitung salzhaltiger Feststoffe und zur Rückgewinnung verschiedener Salze aus einer wässrigen Lösung, die durch Behandeln von derartigen partikelförmigen Feststoffen mit Wasser erhalten wurde, können die verschiedensten Verfahren eingesetzt werden.

Aus der US 140 217 3 A ist ein Verfahren zur Gewinnung von Kaliumchlorid einer wässrigen, hauptsächlich Kaliumchlorid und Natriumchlorid enthaltenden Waschlösung von Zementstäuben bekannt. Bei diesem Verfahren wird die Lösung bis fast zum Sättigungspunkt von Kaliumchlorid verdampft. Dabei fällt Natriumchlorid aus, das abfiltriert wird. Die verbleibende Lösung wird einer Kristallisationsstufe zugeführt, in der Kaliumchlorid ausfällt. Eine ähnliche Auftrennung von Natriumchlorid und Kaliumchlorid offenbart auch die JP 11 2009121 A.

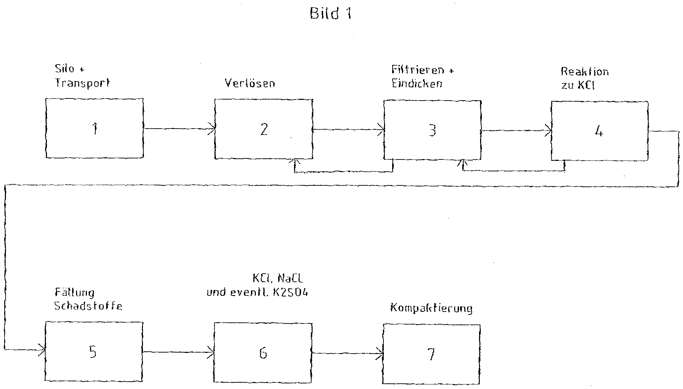

Die bei einer derartigen Aufbereitung bzw. Rückgewinnung durchgeführten Verfahrensschritte sind in dem anliegenden Bild 1 schematisch dargelegt.

Im Schritt 1 wird dabei der Stoff angeliefert und erforderlichenfalls in Silos zwischengelagert und dann gemäß Schritt 2 weiterverarbeitet.

Im Schritt 2 werden die Stoffe verlöst. Als Lösungsmittel wird üblicherweise Wasser eingesetzt. Dabei gehen die in den Stoffen enthaltenen bzw. daran anhaftenden Salze und auch ein Großteil der Schadstoffe in Lösung. Erforderlichenfalls können die Feststoffe noch mechanisch verkleinert werden. Die Partikelgröße im Schritt 2 beträgt zweckmäßigerweise weniger als 1 mm.

Im Schritt 3 wird der Schlamm mit Hilfe geeigneter Abtrenneinrichtungen, beispielsweise Filterpressen oder Vakuumbandfilter bei zweckmäßigerweise gleichzeitigem Waschen des Schlammes durch Kondensat aus den Folgeanlagen abgetrennt. Die abgetrennte Lösung wird mit Restanteilen des Stoffes zu Eindickapparaten transportiert. An dieser Stelle erfolgt die Abtrennung des Restschlammes aus der Lösung. Gewünschtenfalls kann ein Flockungsmittel Anwendung finden.

Die eingedickte Suspension aus dem Eindickapparat wird zurück zum Schritt 2 gefördert, während die klare Lösung weiterverarbeitet wird. Der Schlamm (entsalzter Stoff) kann nach der Entwässerung weiterverwendet werden.

Im Schritt 4 werden - sofern erwünscht und/oder erforderlich - eine oder mehrere der Salze durch Zugabe von Reaktionshilfsmitteln in eine andere Salzform überführt, so dass möglichst wenige unterschiedliche Salze entstehen bzw. Salze entstehen, die in den weiteren Schritten gut voneinander getrennt werden können. Hierbei anfallende Reaktionsstoffe können nach der Aufkonzentrierung durch z. B. Eindicker vor- oder zu Schritt 3 zurückgeführt werden, um sie schlussendlich mit der Hauptschlammmenge zu entsorgen oder mit entsprechenden Einrichtungen abzutrennen, zu entsorgen und zu verkaufen. Die verbleibende klare Lösung wird weiterverarbeitet.

Im Schritt 5 werden - sofern gewünscht - die Schadstoffe durch Zugabe von entsprechenden Fällmitteln ausgefällt. Aus dem Reaktor wird die Suspension in eine Abscheideeinrichtung gegeben, wo gegebenenfalls mit Hilfe von Flockungsmitteln die Vergrößerung der feinsten Schadstoffpartikel erfolgt, so dass diese entweder vor die Filtration der Hauptschlammmenge im Schritt 3 zurückgeführt werden können oder mit dem Schlamm abgetrennt werden. Es kann auch eine separate Abtrennung der Schadstoffe durch beispielsweise Filterpressen oder Vakuumbandfilter zur getrennten Entsorgung erfolgen.

Die bisher geschilderten Schritte sind üblicher Art. Die erforderlichen Verfahrensparameter können je nach Erfordernis festgelegt und gewählt werden. Dies erfolgt insbesondere in Abhängigkeit von der Art und dem Zustand der Zementstäube, von denen bzw. aus denen die hier Rede stehenden Salze erhalten wurden.

Im Schritt 6 wird nun die im Schritt 5 erhaltene salzhaltige und weitestgehende schadstofffreie Lösung weiterverarbeitet. An dieser Stelle greift die vorliegende Erfindung an.

Aufgabe der vorliegenden Erfindung ist es, aus einer die hier in Rede stehenden Salze enthaltenden wässrigen Lösung diese Salze in möglichst reiner sowie möglichst verkaufsfähiger bzw. wiedereinsetzbarer Form zurückzugewinnen, damit die zurückgewonnen Salze den am Markt üblichen Anforderungen entsprechen und verwertet werden können.

Gelöst wird diese Aufgabe durch die Lehre der Ansprüche.

Eine Lösung, die nach dem erfindungsgemäßen Verfahren verarbeitet wird, enthält als Salze Kaliumchlorid und Natriumchlorid sowie Kaliumsulfat.

Bevor die hier mit Aa) und Ab) beschriebenen Verfahrensstufen durchgeführt werden, wird eine Art Vorbehandlung durchgeführt.

Als Rohlösung wird im Rahmen der vorliegenden Unterlagen im Übrigen eine solche bezeichnet, die nach dem oben beschriebenen Schritt 5 erhalten wurde.

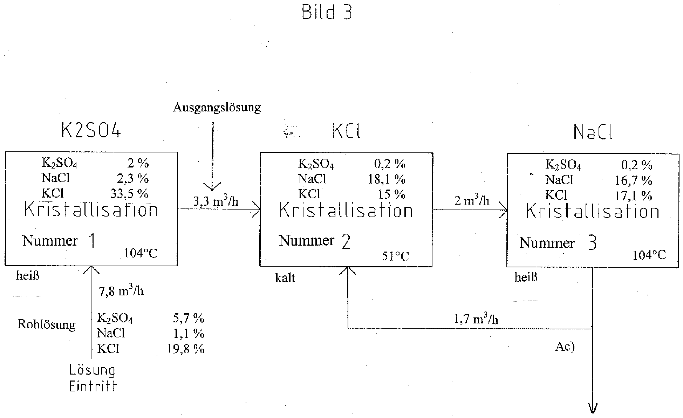

Bei der Vorbehandlung wird die Rohlösung einer heißen Eindampfkristallisationsanlage 1 (man vergleiche Nummer 1 im Bild 3) zugeführt wird. Dort wird die Rohlösung bis knapp unter die Sättigung von Kaliumchlorid eingedampft, wobei Salz ausfällt, das abgetrennt wird. Bei diesem Salz handelt es sich primär um K₂SO₄. Mit anderen Worten, es wird eingedampft, ohne dass die Sättigungsgrenze weder von Kaliumchlorid noch von Natriumchlorid überschritten wird.

Das Kaliumsulfat kann nach Abtrennung, Trocknung und eventueller Granulierung als beispielsweise Düngemittel verkauft werden.

Die Eindampfung in der Eindampfkristallisationsanlage 1 erfolgt bei höheren Temperaturen, worauf nachstehend noch näher eingegangen wird.

Die oben genannte heiße Eindampfkristallisationsanlage 1 und auch die weiter unten näher erläuterten kalte Eindampfkristallisationsanlage 2 sowie die heiße Eindampfkristallisationsanlage 3 sind in dem beiliegenden Bild 3 schematisch dargestellt.

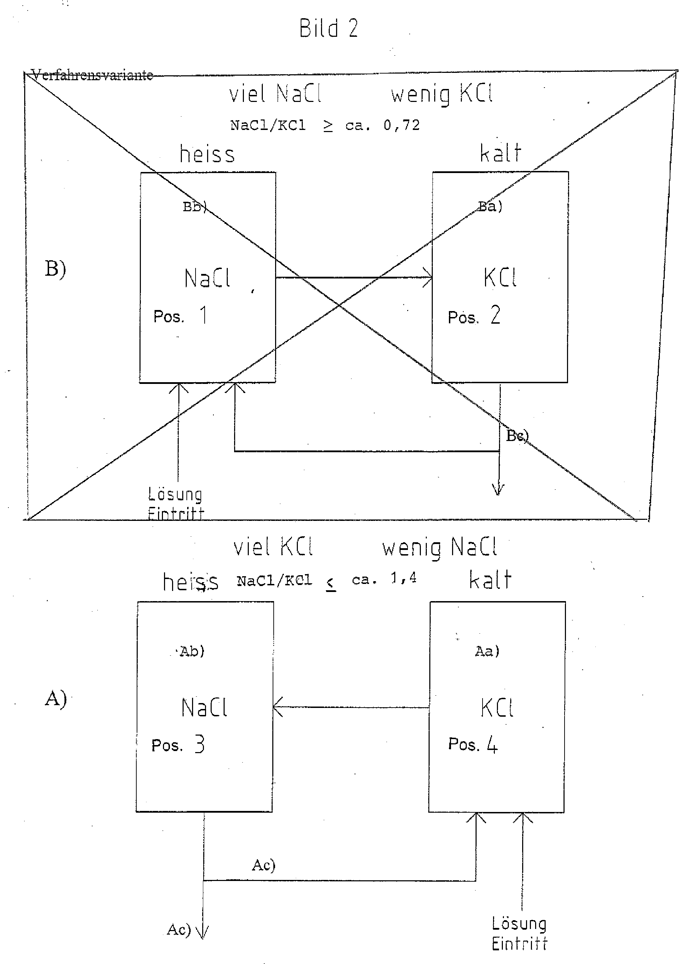

Die nach der Vorbehandlung erhalten Ausgangslösung wird in der Stufe Aa) einer kalten Eindampfkristallisationsanlage 2 zugeführt, in der die Lösung aufkonzentriert wird, ohne dass die Sättigungsgrenze von Natriumchlorid überschritten wird. Dabei kristallisiert Kaliumchlorid aus und wird abgetrennt. Diese Stufe Aa) ist im beiliegenden Bild 2 durch die Position 4 dargestellt.

Ein Teilstrom aus der kalten Eindampfkristallisationsanlage 2 wird in die heiße Eindampfkristallisationsanlage 3 gemäß Stufe Ab) gefördert. In dieser Stufe Ab) wird eingedampft, ohne dass die Sättigungsgrenze von Kaliumchlorid überschritten wird. Dabei kristallisiert Natriumchlorid aus und wird abgetrennt. Der Ablauf bzw. die aus dieser Stufe Ab) austretende Lösung wird entweder verworfen oder vorzugsweise wieder in die kalte Eindampfkristallisationsanlage 2 (Nummer 2 in Bild 3 bzw. Position 4 in Bild 2) zurückgeführt.

Die heiße Eindampfkristallisationsanlage 3 ist im Bild 2 mit der Position 3 bezeichnet. Die Temperatur in der kalten Eindampfkristallisationsanlage 2 (Nummer 2 in Bild 3 bzw. Position 4 im Bild 2) um mindestens 10°C niedriger als in der heißen Eindampfkristallisationsanlage 3.

Mit anderen Worten, der Temperaturunterschied zwischen der kalten Eindampfkristallisationsanlage 2 und der heißen Eindampfkristallisationsanlage 3 und somit zwischen den Verfahrensstufen Aa) einerseits und Ab) andererseits beträgt mindestens 10 °C und vorzugsweise mindestens 30°C, beispielsweise 10, 11, 12 , 13, 14, 15, 15, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, °C usw.

Die Aufkonzentrierung in der kalten Eindampfkristallisationsanlage 2 (Nummer 2 im Bild 3 bzw. Position 4 im Bild 2) erfolgt bei niedrigen Temperaturen von 0 °C bis 69 °C, vorzugsweise bei 20-69 °C und insbesondere bevorzugt bei 30 - 60 °C Diese Bereichsangaben umfassen alle enthaltenen engeren Bereiche und auch alle denkbaren Einzelwerte und stehen insbesondere für 0, 1, 2,3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60 61, 62, 63, 64, 65, 66, 67, 68 und 69°C. Diese Temperaturen werden im Rahmen der vorliegenden Unterlagen als niedrige Temperaturen bezeichnet.

Entsprechend der Temperatur wird natürlich das in der kalten Eindampfkristallisationsanlage 2 herrschende Vakuum gewählt und eingestellt, damit eine Eindampfkristallisation erfolgen kann.

Die Frage, wie niedrig die Temperatur bei dieser Aufkonzentration gewählt werden kann, hängt von verschiedenen Faktoren ab, z. B. der Temperatur des zur Verfügung stehenden Kühlwassers. bzw. der zur Verfügung stehenden Kühleinrichtungen.

Die Eindampfung in der heißen Eindampfkristallisationsanlage 3 (Nummer 3 im Bild 3 bzw. Position 3 im Bild 2) erfolgt bei 70°C bis zum Siedepunkt der Lösung, vorzugsweise bei 90 °C bis zum Siedepunkt der Lösung und somit beispielsweise bei 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 101, 102, 103, 104, 105 °C usw. Der obere Temperaturwert bzw. Siedepunkt hängt natürlich von dem in der Anlage herrschenden Druck ab. Je höher der Anteil der gelösten Stoffe und/oder der Druck ist, desto höher liegt der Siedepunkt der jeweiligen Lösung.

Diese Temperaturen werden im Rahmen der vorliegenden Unterlagen als hohe Temperaturen angesehen. Auch in diesem Falle sind alle engeren Bereiche umfasst und somit offenbart. Gleiches gilt auch für die zwischen den Bereichsgrenzen liegenden Einzelwerte, die damit umfasst und offenbart sind. Bevorzugte Einzelwerte sind somit beispielsweise 90, 91, 92, 93, 94, 95, 96, 97, 98, 99, 100, 101, 102, 103 und 104 °C usw.

Durch den geschilderten Kreislauf zwischen der heißen Stufe und der kalten Stufe kann die gesamte Wassermenge entfernt werden. Zudem kann das gesamte in der Anlage eintretende Natriumchlorid und Kaliumchlorid (abzüglich eventueller Abschlämmungen aufgrund anderer Verunreinigungen) ausgefällt werden.

Die Stufe Ab) wird bei hohen Temperaturen vorzugsweise einstufig ausgeführt, während die kalte Stufe Aa) auch mehrstufig ausgeführt werden kann. Falls es die Eintrittskonzentrationen zulassen, können die Anlagen aus Energieeinsparungsgründen auch dampfmäßig hintereinander geschaltet werden.

Durch den dargestellten Kreislauf kann die gesamte Natriumchlorid- und Kaliumchloridmenge auskristallisiert werden. Um Dampfenergie einzusparen, kann die Stufe Ab) ein- oder mehrstufig durchgeführt und eventuell energetisch hintereinander geschaltet werden, sofern dies die Eintrittskonzentrationen zulassen. Für die heiße Eindampfstufe kann gegebenenfalls auch die Brüdenverdichtung vorgesehen werden.

Die Eindampfkristallisation in der heißen Eindampfkristallisationsanlage 1 und 3 wird vorzugsweise entweder mehrstufig oder mit thermischer oder mechanischer Brüdenverdichtung durchgeführt.

Eine Aufkonzentration in der kalten Eindampfkristallisationsanlage 2 bei niedrigen Temperaturen macht es üblicherweise erforderlich, ein Vakuum anzulegen, um das Lösungsmittel/Wasser bei der gewählten Temperatur zu entfernen und eine Eindampfung und somit eine Aufkonzentration zu erhalten. Aus diesem Grund wird hier auch von einer Eindampfkristallisationsanlage gesprochen. Die Aufkonzentration erfolgt daher vorzugsweise als Vakuum-Kühlstufe.

Wird jedoch eine Lösung mit höherer Temperatur in die kalte Eindampfkristallisationsanlage 2 (Nummer 2 im Bild 3 bzw. Position 2 oder 4 im Bild 2) eingeleitet oder im Kreislauf zurückgeleitet, dann kann es ausreichend sein, dort bei einem entsprechenden Konzentrationsverhältnis von KCl zu NaCl lediglich eine reine Kühlung vorzunehmen, da auch in diesem Fall eine Aufkonzentration bezogen auf die Sättigungsgrenze erfolgt.

In der heißen Eindampfkristallisationsanlage 3 (Nummer 3 im Bild 3 bzw. Position 1 oder 3 im Bild 2) kann es bei einem geeigneten Konzentrationsverhältnis von KCl zu NaCl ausreichend sein, nur zu erwärmen, um NaCl auszufällen bzw. zu kristallisieren.

Im Rahmen der vorliegenden Unterlagen wird aus Zwecken einer besseren Darstellbarkeit eine wässrige Lösung, die durch Behandeln von partikelförmigen Zementstäuben und somit durch Verlösen etc. erhalten wurde, als wässrige Lösung bezeichnet.

Wird diese wässrige Lösung der Verfahrens-Vorstufe in der Eindampfkristallisationsanlage 1 zugeführt, dann wird sie als Rohlösung bezeichnet.

Die der Stufe Aa) zugeführte Lösung wird als Ausgangslösung bezeichnet.

Nach Durchführung der kalten Verfahrensvariante Aa) wird die sich ergebende Lösung in der sich anschließenden Verfahrensstufe Ac) entweder verworfen und/oder zur Stufe Ab) im Kreislauf zurückgeführt. Die während des erfindungsgemäßen Verfahrens erhaltenen Salze können, soweit erforderlich, kompaktiert werden, um einen besseren Verkaufserlös zu erzielen.

Die in den vorliegenden Unterlagen im Zusammenhang mit den Begriffen "Eindampfkristallisation", "Stufe", "Verfahrensstufe" etc verwendeten Ausdrücke "heiß" und kalt" dienen lediglich zur leichteren Unterscheidung der Begriffe. Die erfindungsgemäß zur Anwendung gebrachten Temperaturen sind separat erläutert.

Die Erfindung wird im folgenden anhand einer Rohlösung mit einem niedrigen Natriumchloridgehalt und einem hohen Kaliumchloridgehalt unter Bezug auf das beiliegenden Bild 3 näher erläutert. Diese Rohlösung wurde durch Behandeln eines typischen Zementstaubes erhalten. Die Rohlösung besaß folgende Gehalte (sofern nichts anderes angegeben ist, beziehen sich die %-Angaben auf Gewichtsprozent): Kaliumsulfat 5,7 %, Natriumchlorid 1,1 %, Kaliumchlorid 15,8 %.

Die Rohlösung wird - wie im Bild 3 gezeigt - in einer heißen Eindampfkristallisationsanlage 1 (stellt eine bevorzugte Vorstufe dar) bis knapp unter die Sättigung von Kaliumchlorid eingedampft. Die Eindampfung erfolgt somit ohne dass die Sättigungsgrenze von Kaliumchlorid überschritten wird. Vorzugsweise wird bei einer hohen Temperatur gearbeitet, da bei einer hohen Temperatur eine möglichst geringe Kaliumsulfat-Sättigung bei hoher Kaliumchlorid-Konzentration in der Lösung existiert. So beträgt beispielsweise bei ca. 100 °C die Sättigungsgrenze von Kaliumchlorid ca. 33,5 %, während die Sättigungs-grenze von Kaliumsulfat ca. 1,85 % beträgt. Der Einfluss des Natriumchlorids bleibt aufgrund der geringen Menge in der Rohlösung und dem daraus resultierenden geringen Einflüssen auf die Löslichkeit bei dieser Betrachtung unberücksichtigt. Als beispielhafte Temperatur kann hier 104 °C genannt werden.

Die Rohlösung wird dabei in einer Menge von ca. 7,8 m³/h in die Eindampfkristallisationsanlage 1 eingeleitet.

Durch diesen Verfahrensschritt können aus der Rohlösung über 80 % des vorhandenen Kaliumsulfats auskristallisiert werden, das nach Abtrennung, Trocknung und evtl. Granulierung einer gewerblichen Verwendung zugeführt werden kann, beispielsweise als Düngemittel.

Die aus der heißen Eindampfkristallisationsanlage 1 (Nummer 1 im Bild 3) ablaufende Lösung (K₂SO₄ = 2 %, NaCl = 2,3 %, KCl = 33,5 %) gelangt in die nachfolgende kalte Eindampfkristallisationsanlage 2 (Nummer 2 im Bild 3 bzw. Position 4 im Bild 2), in der weiter eingedampft wird, ohne dass die Natriumchlorid-Sättigung überschritten wird. In dieser kalten Eindampfkristallisationsanlage 2 (Nummer 2 im Bild 3 bzw. Position 4 im Bild 2) wird die erfindungsgemäße Stufe Aa) durchgeführt.

Die Aufkonzentrierung erfolgt hierbei bei niedriger Temperatur, da bei einer niedrigen Temperatur eine möglichst hohe Natriumchlorid-Sättigung bei möglichst niedriger Kaliumchlorid-Sättigung herrscht. Als beispielhafte Temperatur kann hier 51 °C genannt werden. Bei dieser Temperatur wird ein Druck von ca. 100 mbar eingestellt.

In dieser kalten Stufe Aa) fällt zusammen mit dem Kaliumchlorid auch das noch lösliche Kaliumsulfat aus. Das entstehende Salz kann nach Abtrennung, Trocknung und eventuell Granulierung als hochwertiges Düngemittel verkauft werden, da es die für ein solches Düngemittel erforderlichen Reinheitsanforderungen erfüllt.

Die aus der heißen Eindampfkristallisationsanlage 1 (Nummer 1 im Bild 3) erhaltene Lösung wird im Übrigen bei dem hier beschriebenem Beispiel in einer Menge von 3,3 m³/h in die kalte Eindampfkristallisationsanlage 2 (Nummer 2 im Bild 3 bzw. Position 4 im Bild 2) überführt.

Die aus der kalten Eindampfkristallisationsanlage 2 (Nummer 2 im Bild 3 bzw. Position 4 im Bild 2) austretende kalte Lösung (K₂SO₄ = 0,2 %, NaCl = 18,1 %, KCl = 15 %) wird in eine weitere heiße Eindampfkristallisationsanlage 3 (Nummer 3 im Bild 3 bzw. Position 3 im Bild 2) überführt, die bei hohen Temperaturen arbeitet. In dieser heißen Eindampfkristallisationsanlage 3 wird die erfindungsgemäße Stufe Ab) durchgeführt.

In der heißen Eindampfkristallisationsanlage 3 (Nummer 3 im Bild 3 bzw. Position 3 im Bild 2) wird die Lösung weiter eingedampft. Da sich bei einer höheren Temperatur (z. B. 104 °C) eine höhere Kaliumchlorid-Sättigung und eine niedrigere Natriumchlorid-Sättigung ergibt (mit anderen Worten: die Sättigungsgrenze von Kaliumchlorid ist bei einer höheren Temperatur höher bzw. größer als die Sättigungsgrenze von Natriumchlorid), fällt in dieser Stufe Natriumchlorid aus, in dem die Lösung bis knapp unter die Sättigungsgrenze des Kaliumchlorids bei hoher Temperatur eingedampft wird. Das entstehende Natriumchlorid kann nach Abtrennung, eventueller Trocknung und Granulierung beispielsweise als Streusalz verkauft werden.

In der heißen Eindampfkristallisationsanlage 3 (Nummer 3 im Bild 3 bzw. Position 3 im Bild 2) ergibt sich eine Abstoßlösung, die an Natriumchlorid gesättigt und an Kaliumchlorid nahezu gesättigt ist (K₂SO₄ = 0,2 %, NaCl = 16,7 %, KCl = 17,1 %). Diese Lösung wird zurück in die kalte Eindampfkristallisationsanlage 2 (Nummer 2 im Bild 3 bzw. Position 4 im Bild 2) geführt, worin aufgrund der geringen Löslichkeit von Kaliumchlorid bei tieferer Temperatur weiteres Kaliumchlorid ausfällt. Bei entsprechender Einstellung dieses Kreislaufes zwischen Eindampfkristallisationsanlage 2 und 3 kann bei Verdampfung des Restwassers eine komplette Trennung von Kaliumchlorid und Natriumchlorid erzielt werden. Wenn erfindungsgemäß von viel NaCl und wenig KCl bzw. einem hohen NaCl-Gehalt und einem niedrigen KCl-Gehalt die Rede ist, bedeutet dies vorzugsweise NaCl/KCl ≥ 0,72. Ist hingegen von wenig NaCl und viel KCl bzw. einem niedrigen NaCl-Gehalt und einem hohen KCl-Gehalt die Rede ist, bedeutet dies vorzugsweise NaCl/KCl ≤ 1,4 (bezieht sich auf das Gewicht).

**Definitionen**

| | | |
|---|---|---|
| Eindampfkristallisationsanlage 1 = heiß | K₂SO₄ Auskristallisation | = Nummer 1 im Bild 3 |
| Eindampfkristallisationsanlage 2 = kalt | KCl Auskristallisation Stufe Aa) | = Nummer 2 in Bild 3 = Position 4 im Bild 2 kalte Stufe |
| Eindampfkristallisationsanlage 3 = heiß | NaCl Auskristallisation Stufe Ab) | = Nummer 3 in Bild 3 = Position 3 im Bild 2 heiße Stufe |

## Patentansprüche

1. Verfahren zur Rückgewinnung von Kaliumchlorid und Natriumchlorid sowie Kaliumsulfat aus einer wässrigen Rohlösung, die durch Behandeln von Zementstäuben mit Wasser erhalten wurde,
**dadurch gekennzeichnet, dass**
die Rohlösung einer heißen Eindampfkristallisationsanlage (1), die bei hohen Temperaturen von 70°C bis zum Siedepunkt der Lösung betrieben wird, zugeführt wird und dort eingedampft wird, ohne dass die Sättigungsgrenze weder von Kaliumchlorid noch von Natriumchlorid überschritten wird, wobei ausgefallenes K₂SO₄ abgetrennt wird,
die nach der Abtrennung erhaltene Ausgangslösung
Aa) einer kalten, bei niedrigen Temperaturen von 0°C bis 69 °C betriebenen Eindampfkristallisationsanlage (2) zugeführt wird, in der die Lösung aufkonzentriert wird, ohne dass die Sättigungsgrenze von Natriumchlorid überschritten wird, und das ausgefallene KCl abgetrennt wird,
Ab) die aus der Stufe Aa) Lösung austretende Lösung einer heißen, bei hohen Temperaturen von 70°C bis zum Siedepunkt der Lösung betriebenen Eindampfkristallisationsanlage (3) zugeführt und dort eingedampft wird, ohne dass die Sättigungsgrenze von Kaliumchlorid überschritten wird, und das ausfallende NaCl abgetrennt wird und,
Ac) die aus der Stufe Ab) austretende Lösung verworfen und/oder wieder in die Stufe Aa) zurückgeführt wird,
und
dass die Temperatur in der kalten Eindampfkristallisationsanlage (2) um mindestens 10°C niedriger ist als in der heißen Eindampfkristallisationsanlage (3).

2. Verfahren nach Anspruch 1,
**dadurch gekennzeichnet, dass**
eine Rohlösung mit einem Gewichtsverhältnis von NaCl zu KCl ≤ 1,4 eingesetzt wird.

3. Verfahren nach Anspruch 1 oder 2,
**dadurch gekennzeichnet, dass**
die niedrigen Temperaturen 20°C bis 69 °C, insbesondere 30°C bis 60°C, weiterhin insbesondere 51°C und die hohen Temperaturen 104°C betragen.

4. Verfahren nach einem der vorhergehenden Ansprüche,
**dadurch gekennzeichnet, dass**
die Eindampfkristallisation in den heißen Eindampfkristallisationsanlage (1) und (3) mehrstufig oder mit thermischer oder mechanischer Brüdenverdichtung durchgeführt wird.

5. Verfahren nach einem der vorhergehenden Ansprüche,
**dadurch gekennzeichnet, dass**
die Eindampfkristallisation in der kalten Eindampfkristallisationsanlage (2) als Vakuum-Kühlstufe durchgeführt wird.

6. Verfahren nach einem der vorhergehenden Ansprüche,
**dadurch gekennzeichnet, dass**
die Temperatur in der kalten Eindampfkristallisationsanlage (2) um mindestens 30°C niedriger ist als in der heißen Eindampfkristallisationsanlage (3).

7. Verfahren nach einem der vorhergehenden Ansprüche,
**dadurch gekennzeichnet, dass**
die Eindampfkristallisation in der heißen Eindampfkristallisationsanlage (3) nur durch Erwärmen erreicht wird.

## Claims

1. A process for the recovery of potassium chloride and sodium chloride as well as potassium sulfate from an aqueous basic solution obtained by treating cement dusts with water,
**characterized in that**
the basic solution is fed to a hot evaporation crystallization unit (1) operated at high temperatures of 70°C up to the boiling point of the solution and is evaporated there without exceeding the saturation limit neither of potassium chloride nor of sodium chloride, whereby precipitated K₂SO₄ is separated off,
the basic solution obtained after the precipitation
Aa) is fed to a cold evaporation crystallization plant (2) operated at low temperatures of 0°C to 69°C, in which the solution is concentrated without exceeding the saturation limit of sodium chloride, and the precipitated KCl is separated off,
Ab) the solution emerging from stage Aa) is fed to a hot evaporation crystallization plant (3) operated at high temperatures of 70°C up to the boiling point of the solution, and is evaporated there without exceeding the saturation limit of potassium chloride, and the precipitated NaCl is separated off, and
Ac) the solution emerging from stage Ab) is discarded and / or returned back to stage Aa),
and
the temperature in the cold evaporation crystallization plant (2) is lower by at least 10° C than in the hot evaporation crystallization plant (3).

2. Process according to claim 1,
**characterized in that**
a basic solution with a weight ratio of NaCl to KCl ≤ 1.4 is used.

3. Process according to Claim 1 or 2,
**characterized in that** the low temperatures are 20°C to 69°C, in particular 30°C to 60°C, furthermore in particular 51° C and the high temperatures are 104° C.

4. Process according to one of the preceding claims,
**characterized in that**
the evaporation crystallization in the hot evaporating crystallization plant (1) and (3) is carried out in several stages or with thermal or mechanical vapor compression.

5. Process according to one of the preceding claims,
**characterized in that**
the evaporation crystallization in the cold evaporation crystallization plant (2) as a vacuum cooling stage.

6. Process according to one of the preceding claims,
**characterized in that**
the temperature in the cold evaporation crystallization plant (2) is lower by at least 30 ° C than in the hot evaporation crystallization plant (3).

7. Process according to one of the preceding claims,
**characterized in that**
the evaporation crystallization in the hot evaporation crystallization plant (3) is achieved by heating only.

## Revendications

1. Procédé de récupération de chlorure de potassium et de chlorure de sodium ainsi que de sulfate de potassium à partir d'une solution brute aqueuse obtenue par traitement de poussières de ciment avec de l'eau,
**caractérisé en ce que**
la solution brute est amenée à une installation de cristallisation par évaporation à chaud (1) qui est exploitée à des températures élevées de 70°C au point d'ébullition de la solution, et y est évaporée sans que la limite de saturation ni du chlorure de potassium ni du chlorure de sodium ne soit franchie, sachant que du K₂SO₄ précipité est séparé,
la solution de départ obtenue après la séparation
Aa) est amenée à une installation de cristallisation par évaporation à froid (2) exploitée à des températures basses de 0°C à 69°C dans laquelle la solution est concentrée sans que la limite de saturation du chlorure de sodium soit franchie, et le KCl précipité est séparé,
Ab) la solution émanant de l'étape Aa) est amenée à une installation de cristallisation par évaporation à chaud (3) exploitée à des températures élevées de 70°C au point d'ébullition de la solution et y est évaporée sans que la limite de saturation du chlorure de potassium soit franchie, et le NaCl précipité est séparé et
Ac) la solution émanant de l'étape Ab) est rejetée et/ou ramenée à l'étape Aa),
et
la température dans l'installation de cristallisation par évaporation à froid (2) est d'au moins 10°C plus basse que dans l'installation de cristallisation par évaporation à chaud (3).

2. Procédé selon la revendication 1,
**caractérisé en ce que**
une solution brute présentant un rapport de poids de NaCl à KCl ≤ 1,4 est utilisée.

3. Procédé selon la revendication 1 ou 2,
**caractérisé en ce que**
les températures basses sont de 20°C à 69°C, en particulier de 30°C à 60°C, plus particulièrement de 51°C et les températures élevées sont de 104°C.

4. Procédé selon l'une des revendications précédentes,
**caractérisé en ce que**
la cristallisation par évaporation dans les installations de cristallisation par évaporation à chaud (1) et (3) est effectuée en plusieurs étapes ou avec une compression thermique ou mécanique des vapeurs.

5. Procédé selon l'une des revendications précédentes,
**caractérisé en ce que**
la cristallisation par évaporation dans l'installation de cristallisation par évaporation à froid (2) est effectuée comme étape de refroidissement sous vide.

6. Procédé selon l'une des revendications précédentes,
**caractérisé en ce que**
la température dans l'installation de cristallisation par évaporation à froid (2) est d'au moins 30°C plus basse que dans l'installation de cristallisation par évaporation à chaud (3).

7. Procédé selon l'une des revendications précédentes,
**caractérisé en ce que**
la cristallisation par évaporation dans l'installation de cristallisation par évaporation à chaud (3) n'est atteinte que par chauffage.
